# EUROPÄISCHE PATENTSCHRIFT

(11) **EP 4 222 042 B1**
(45) Veröffentlichungstag und Bekanntmachung des Hinweises auf die Patenterteilung: **28.01.2026**
(21) Anmeldenummer: 21782758.3
(22) Anmeldetag: 29.09.2021
(51) Int. Cl.: B62D 1/19

(54) **LENKSÄULE FÜR EIN KRAFTFAHRZEUG**
STEERING COLUMN FOR A MOTOR VEHICLE
COLONNE DE DIRECTION POUR UN VÉHICULE AUTOMOBILE

(30) Priorität: 02.10.2020 DE 102020212481
(43) Veröffentlichungstag der Anmeldung: 09.08.2023
(73) Patentinhaber: thyssenkrupp Presta AG, 9492 Eschen (LI); thyssenkrupp AG, 45143 Essen (DE)
(72) Erfinder: RAICH, Thomas, 6773 Vandans (AT)
(74) Vertreter: thyssenkrupp Intellectual Property GmbH
(86) Internationale Anmeldenummer: PCT/EP2021/076770
(87) Internationale Veröffentlichungsnummer: WO 2022/069531

(56) Entgegenhaltungen:
- DE-A1- 102011 015 140
- DE-A1- 102016 220 533
- DE-A1- 4 138 239
- US-A- 3 612 223
- US-A- 5 547 221
- US-A1- 2017 120 945

## Beschreibung

### Stand der Technik

Die Erfindung betrifft eine Lenksäule für ein Kraftfahrzeug, umfassend eine Stelleinheit, in der eine Lenkspindel um eine in Längsrichtung erstreckte Längsachse drehbar gelagert ist, eine mit einer Kraftfahrzeugkarosserie verbindbare Trageinheit, in der die Stelleinheit in Längsrichtung verlagerbar gehalten ist, und eine zwischen der Trageinheit und der Stelleinheit eingegliederte Energieabsorptionseinrichtung, mit einem langgestreckten, über eine Befestigung an der Stelleinheit oder der Trageinheit befestigten Energieabsorptionselement und einem damit zusammenwirkenden, an der Trageinheit oder der Stelleinheit angebrachten Verformungsorgan, welches im Crashfall bei einer relativen Verschiebung von Stelleinheit und Trageinheit eine energieabsorbierende plastische Verformung des Energieabsorptionselements bewirkt, wobei das Energieabsorptionselement an der Stelleinheit befestigt und das damit zusammenwirkende Verformungsorgan an der Trageinheit angebracht ist, oder das Energieabsorptionselement an der Trageinheit befestigt und das damit zusammenwirkende Verformungsorgan an der Stelleinheit angebracht ist, wobei die Befestigung eine in Längsrichtung festgelegte Fixierverbindung aufweist.

Bei einer derartigen Lenksäule ist das Lenkrad am bezüglich der Fahrtrichtung hinteren Ende der Lenkspindel angebracht, die in der Stelleinheit drehbar in einem Mantelrohr, auch als Innenmantel oder inneres Mantelrohr bezeichnet, gelagert ist. Die Stelleinheit ist von einer Trageinheit gehalten, die an der Fahrzeugkarosserie montiert ist.

Zur Verbesserung der Insassensicherheit bei einem Fahrzeugzusammenstoß, dem sogenannten Crashfall, bei dem ein Körper mit hoher Geschwindigkeit auf das Lenkrad aufprallt, ist es bekannt, die Stelleinheit relativ zur Trageinheit in Längsrichtung nachgiebig verlagerbar aufzunehmen, beispielsweise in einer teleskopierbaren Anordnung in einer Manteleinheit, auch als Außenmantel oder äußeres Mantelrohr bezeichnet, und zwischen der Stelleinheit und der Trageinheit eine Energieabsorptionseinrichtung einzukoppeln, die auch als Crash-System bezeichnet wird. Derartige Sicherheits-Lenksäulen sind im Stand der Technik beispielsweise aus der DE 10 2011 015 140 A1 oder der DE 10 2016 220 531 A1 bekannt.

Wird im Crashfall durch einen auf das Lenkrad auftreffenden Körper eine hohe Kraftspitze auf das Lenkrad ausgeübt, die einen vorgegebenen Grenzwert überschreitet, werden die Stelleinheit und die Trageinheit in Längsrichtung zusammengeschoben. Dabei wird ein Energieabsorptionselement der Energieabsorptionseinrichtung plastisch verformt und absorbiert durch Umsetzung in Verformungsarbeit die in Längsrichtung eingeleitete kinetische Energie, so dass der auf das Lenkrad aufprallende Körper kontrolliert abgebremst wird und die Verletzungsgefahr verringert wird.

In der DE 10 2011 015 140 A1 wird vorgeschlagen, als Energieabsorptionselement einen in Längsrichtung langgestreckten Energieabsorptionsstreifen, beispielsweise ein streifenförmiges Blech in Längsrichtung an der Stelleinheit anzubringen, und als Verformungsorgan einen an einem Außenmantel der Trageinheit angebrachten Deformationsschlitten, der einen die Längsseiten des Energieabsorptionsstreifens umgreifenden Durchgang hat. Dieser hat Untermaß bezüglich des Querschnitts des Energieabsorptionsstreifens, d.h. der Energieabsorptionsstreifen ist, quer zur Längsrichtung gemessen, breiter als der Durchgang. Im Crashfall wird das Verformungsorgan in Längsrichtung an dem Energieabsorptionsstreifen entlangbewegt und durch den Durchgang hindurch gezogen, wobei der Energieabsorptionsstreifen über seine Länge fortlaufend quer plastisch zusammengequetscht wird. Dadurch erfolgt eine effektive Energieabsorption.

Um eine zuverlässige Funktion zu gewährleisten, ist es aus dem Stand der Technik bekannt, das Energieabsorptionselement mittels einer Befestigung derart an der Stelleinheit zu befestigen, dass die in Längsrichtung bei der Verformung im Crashfall auftretenden Crashkräfte sicher aufgenommen werden. Hierzu wird vorgeschlagen, beide Endbereiche des Energieabsorptionsstreifens mittels Befestigungseinrichtungen, die als Fixierverbindungen ausgebildet sind, an der Stelleinheit positionsfest zu fixieren. Dadurch wird ein sicherer Halt erzeugt. Bei der plastischen Verformung im Crashfall wird jedoch nicht nur der Querschnitt deformiert, sondern der Energieabsorptionsstreifen wird auch plastisch in Längsrichtung gestreckt bzw. gelängt. Diese Längenvergrößerung kann dazu führen, dass der zwischen den Fixierverbindungen in Längsrichtung fest abgestützte Energieabsorptionsstreifen seitlich ausbricht, und sich durch ein knickstabähnlich quer zur Längsrichtung durchbiegt. Dadurch kann eine unerwünschte Beeinträchtigung der Energieabsorptionscharakteristik auftreten, die zu einer ungleichmäßigen Energieabsorption im Crashfall führen kann.

Die geschilderte Problematik kann auch bei der aus der DE 10 2016 220 533 A1 bekannten Energieabsorptionseinrichtung auftreten.

Angesichts der vorangehend erläuterten Problematik ist es eine Aufgabe der vorliegenden Erfindung, eine verbesserte Energieabsorptionseinrichtung zur Verfügung zu stellen, welche eine gleichmäßigere Energieabsorption ermöglicht.

### Darstellung der Erfindung

Diese Aufgabe wird erfindungsgemäß gelöst durch die Lenksäule mit den Merkmalen des Anspruchs 1. Vorteilhafte Weiterbildungen ergeben sich aus den Unteransprüchen.

Bei einer Lenksäule für ein Kraftfahrzeug, umfassend eine Stelleinheit, in der eine Lenkspindel um eine in Längsrichtung erstreckte Längsachse drehbar gelagert ist, eine mit einer Kraftfahrzeugkarosserie verbindbare Trageinheit, in der die Stelleinheit in Längsrichtung verlagerbar gehalten ist, und eine zwischen der Trageinheit und der Stelleinheit eingegliederte Energieabsorptionseinrichtung, mit einem langgestreckten, über eine Befestigung an der Stelleinheit oder der Trageinheit befestigten Energieabsorptionselement und einem damit zusammenwirkenden, an der Trageinheit oder der Stelleinheit angebrachten Verformungsorgan, welches im Crashfall bei einer relativen Verschiebung von Stelleinheit und Trageinheit eine energieabsorbierende plastische Verformung des Energieabsorptionselements bewirkt, wobei das Energieabsorptionselement an der Stelleinheit befestigt und das damit zusammenwirkende Verformungsorgan an der Trageinheit angebracht ist, oder das Energieabsorptionselement an der Trageinheit befestigt und das damit zusammenwirkende Verformungsorgan an der Stelleinheit angebracht ist, wobei die Befestigung eine in Längsrichtung festgelegte Fixierverbindung aufweist, ist erfindungsgemäß vorgesehen, dass die Befestigung mindestens eine in Längsrichtung versatzausgleichend ausgebildete Befestigungseinrichtung aufweist, die in Längsrichtung verschiebbar ausgestaltet ist.

Die erfindungsgemäße Lenksäule lässt verschiedene Ausführungsvarianten zu: In einer ersten Ausführung ist das Energieabsorptionselement an der Stelleinheit befestigt und das damit zusammenwirkende Verformungsorgan ist an der Trageinheit angebracht. In einer weiteren Ausführungsvariante ist das Energieabsorptionselement an der Trageinheit befestigt und das damit zusammenwirkende Verformungsorgan ist an der Stelleinheit angebracht.

Bei der Erfindung ist zumindest eine Befestigungseinrichtung, mittels der das Energieabsorptionselement an der Stelleinheit bzw. der Trageinheit befestigt ist, in Längsrichtung derart verschiebbar ausgebildet, dass sie eine Bewegung in Längsrichtung des Energieabsorptionselements relativ zur Stelleinheit bzw. Trageinheit zulässt. Mit anderen Worten kann durch die mögliche relative Verschiebung innerhalb der erfindungsgemäßen Befestigungseinrichtung ein lokaler Versatz in Längsrichtung, der durch eine Längung des Energieabsorptionselements bei der plastischen Verformung im Crashfall entsteht, ausgeglichen werden. Durch die erfindungsgemäße versatzausgleichende Befestigungseinrichtung ist das Energieabsorptionselement, bevorzugt ein langgestreckt streifenförmiger Energieabsorptionsstreifen, quer zur Längsrichtung, d.h. radial und in Umfangsrichtung bezüglich der Längsachse fixiert und gehalten, wie auch bei den starren Fixierverbindungen im Stand der Technik. Im Unterschied dazu kann sich der Befestigungspunkt erfindungsgemäß in Längsrichtung bei einer Längenvergrößerung mitbewegen, so dass bei der Verformung im Crashfall in dem Energieabsorptionselement keine Druckspannung in Längsrichtung aufgebaut wird, und die knickstabähnliche Belastung wegfällt. Der dadurch erreichte Vorteil ist, dass ein Ausbrechen oder seitliches Durchbiegen vermieden wird, auch wenn das Energieabsorptionselement als Energieabsorptionsstreifen in Form eines relativ schmalen Blechstreifens oder dergleichen ausgebildet ist.

Bevorzugt erfolgt die relative Verschiebung innerhalb der erfindungsgemäßen Befestigungseinrichtung ohne plastische Deformation bzw. ohne Energieabsorption, zumindest ist eine solche nicht gewünscht. In einer theoretisch idealen erfindungsgemäßen Befestigungseinrichtung würde die relative Verschiebung, sprich der Versatzausgleich, ohne eine dieser Verschiebung entgegenstehenden Widerstandskraft erfolgen, denn je höher die Kraft zur relativen Verschiebung zur Realisierung des Versatzausgleichs ist, desto mehr würden die Nachteile aus dem Stand der Technik bekannten und nachteiligen starren Verbindung auftreten. Die Widerstandskraft ist somit bevorzugt derart gering ausgestaltet, dass diese die relative Verschiebung beim Verstatzausgleich, beispielsweise im Langloch, und technisch ohne Bedeutung ist.

Die versatzausgleichende Befestigungseinrichtung ist bevorzugt räumlich und funktional von einem Energieabsorptionsabschnitt des Energieabsorptionselements getrennt ausgebildet. Der Energieabsorptionsabschnitt wird mittels des Verformungsorgans plastisch deformiert, und die Befestigungseinrichtung ist außerhalb des deformierbaren Beerichs angeordnet und wird bei der Energieabsorption im Crashfall nicht verformt. Dank dieser getrennten Ausbildung können die einzelnen Abschnitte genau auf die ihr zugedachte Funktion hin ausgelegt und Optimiert werden, ohne dass diese sich nachteilig aufeinander auswirken.

Ein Vorteil ist somit die erhöhte Funktionssicherheit bei der Energieabsorption im Crashfall. Dies führt zu einer Erhöhung der Insassensicherheit. Ein weiterer Vorteil ist, dass die Gestaltungsfreiheit für das Energieabsorptionselement erhöht wird, da dieses nicht oder zumindest weniger in Längsrichtung auf Druck beansprucht wird, und somit beispielsweise ein höherer Verformungsgrad ermöglicht werden kann. Die damit einhergehende größere Längung im Crashfall kann nämlich dank der Erfindung sicher ausgeglichen werden und beeinträchtigt die Energieabsorption nicht. Es kann auch ein relativ schmalerer Energieabsorptionsstreifen als im Stand der Technik eingesetzt werden, wodurch eine Baurauoptimierung erfolgen kann.

Bevorzugt kann vorgesehen sein, dass jeweils eine Befestigungseinrichtung in einem Endbereich des Energieabsorptionselements angeordnet ist. Das Energieabsorptionselement kann beispielsweise streifenförmig ausgebildet sein als schmaler, in Längsrichtung langgestreckter Energieabsorptions- oder Verformungsstreifen, beispielsweise als Blechstreifen oder -steg. Die Befestigung weist mindestens zwei Befestigungseinrichtungen auf, die in den Endbereichen des Energieabsorptionsstreifens angeordnet sind. Entsprechend ist jeweils eine Befestigungseinrichtung in Fahrtrichtung vorne und hinten angeordnet. Mindestens eine der beiden Befestigungseinrichtungen ist erfindungsgemäß versatzausgleichend, d.h. in Längsrichtung verschiebbar ausgestaltet.

Es ist vorteilhaft, dass die Befestigung eine in Längsrichtung festgelegte, d.h. fixe Fixierverbindung aufweist. Diese Fixierverbindung bildet eine in Längsrichtung unverschiebbare, starre Verbindung zwischen Energieabsorptionselement und Stelleinheit. Somit weist eine erfindungsgemäß ausgestaltete Energieabsorptionseinrichtung mindestens eine in Längsrichtung fixe Fixierverbindung und eine in Längsrichtung variable versatzausgleichende Befestigungseinrichtung auf. Ein Vorteil dabei ist, dass die Fixierverbindung unabhängig von der erfindungsgemäßen Ausgleichsfunktion so belastbar ausgelegt werden kann, dass im Crashfall ein sicherer Halt in Längsrichtung gewährleistet ist. In Crashfall ist das Energieabsorptionselement in der Fixierverbindung positionsfest gehalten, und in einem durch die Längung in Längsrichtung bewegten Abschnitt erfindungsgemäß in Längsrichtung verschiebbar.

In der vorangehend beschriebenen Ausführung mit den vorn und hinten angeordneten Befestigungseinrichtungen ist es vorteilhaft, dass die in Fahrrichtung vordere Befestigungseinrichtung als Fixierverbindung ausgebildet ist, und entsprechend hinten eine versatzausgleichende Befestigungseinrichtung. In einem normalen Betriebszustand vor einem Crash befindet sich das Verformungsorgan im vorderen Endbereich des Energieabsorptionsstreifens im Bereich der fixen Verbindung, und wird im Crashfall über die Länge des Energieabsorptionselements in Richtung auf das hintere, versatzausgleichende Befestigungselement zu bewegt, Dabei wird das Energieabsorptionselement in Längsrichtung zwischen der Fixierverbindung und dem Verformungsorgan auf Zug belastet und dadurch gelängt bzw. gestreckt. Der dabei an der anderen Befestigungseinrichtung am hinteren Ende auftretende Längsversatz zwischen dem Energieabsorptionsstreifen und der Stelleinheit wird durch die erfindungsgemäß versatzausgleichende Befestigungseinrichtung ausgeglichen.

Eine vorteilhafte Ausführung der Erfindung sieht vor, dass die versatzausgleichende Befestigungseinrichtung ein in Längsrichtung erstrecktes Langloch aufweist, durch das sich ein Verbindungselement erstreckt. Ein Langloch kann mit geringem Aufwand in dem Energieabsorptionselement ausgebildet sein, und das Verbindungselement an der Stelleinheit fixiert sein. Beispielsweise kann das Langloch in einem Endabschnitt einem Verformungsstreifen aus Blech ausgebildet sein, beispielsweise durch Stanzen. Das Verbindungselement kann stift- oder bolzenförmig ausgebildet sein und damit korrespondierend eine Querabmessung haben, so dass es in dem Langloch in Längsrichtung verschiebbar ist. In Querrichtung ist das Verbindungselement bevorzugt spielfrei oder spielarm gehalten, so dass die Befestigung in quer zur Längsrichtung in Umfangsrichtung fest und unverrückbar ist. Auf diese Weise weist die erfindungsgemäße Befestigungseinrichtung eine Gleitführung in Längsrichtung auf. Das Verbindungselement wird von außen durch das Langloch hindurchgesteckt und in Längsrichtung unverschiebbar mit Stelleinheit verbunden. Dadurch wird einfach und effektiv eine in Längsrichtung variable, verschiebbare Verbindung geschaffen, und das Energieabsorptionselement kann sich um die Länge des Langlochs in Längsrichtung relativ zur Stelleinheit verschieben, und durch Längung im Crashfall auftretender Versatz kann ausgeglichen werden.

In einer vorteilhaften Weiterbildung weist das Langloch zumindest in einem Abschnitt eine Spielpassung zu dem Verbindungselement auf. Versuche haben gezeigt, dass Spielpassungen mit einem Spiel von mehr als 10µm quasi keine störenden Widerstandskräfte beim Versatzausgleich aufweisen, insbesondere können so Stick-Slip-Effekte weitestgehend vermieden werden. Somit sind Spielpassungen mit einem Spiel größer 10µm besonders bevorzugt. Die Spielpassung wird dabei in einer quer zur Bewegungsrichtung der versatzausgleichenden Bewegung bestimmt.

In einer vorteilhaften Weiterbildung kann es vorgesehen sein, dass das Langloch einen weiteren Abschnitt eine Übermaßpassung zu dem Verbindungselement aufweist. In diesem Abschnitt ist das Verbindungselement vor dem Eintreten der versatzausgleichenden Bewegung angeordnet und wird durch die versatzausgleichende Bewegung aus diesem Abschnitt herausbewegt, hinein in den Abschnitt mit der Spielpassung. Dank des Abschnitts der Übermaßpassung kann das Energieabsorptionselement sicher ohne störendes Spiel an der Stelleinheit oder der Trageinheit festgelegt werden.

Das Verbindungselement kann als Niet, Hohlniet, Zapfen, Bolzen, Schrauben oder dergleichen ausgebildet sein, an der Stelleinheit fixiert ist, und bevorzugt unlösbar mit der Stelleinheit verbunden ist, beispielsweise durch Anbringung außen an dem Mantelrohr.

Bevorzugt kann das Verbindungselement außen einen über die Querabmessung des Langlochs überstehenden Kopf haben, mit dem das Energieabsorptionselement von außen gegen die Stelleinheit gehalten wird. Dadurch ist das Energieabsorptionselement formschlüssig und sicher an der Stelleinheit gehalten.

Es kann vorgesehen sein, das Langloch in Längsrichtung geschlossen ist, bevorzugt beidseitig. Die dadurch vorgegebene Länge des Langlochs abzüglich des Querschnitts des Verbindungselements begrenzt die Verschiebung in Längsrichtung und damit den möglichen Versatzausgleich im Crashfall. Ein Vorteil dabei ist, dass das Energieabsorptionselement, beispielsweise ein Energieabsorptionstreifen, auch während und nach einer Längung im Crashfall in jeder Richtung an der Stelleinheit gehalten ist.

Es kann alternativ vorgesehen sein, dass das Langloch an einem Ende offen ist. Dadurch, dass das Langloch zu einem Ende des Energieabsorptionselements hin in Längsrichtung offen ist, wird eine gabelförmige Anordnung gebildet. Ein Vorteil ist, dass zur Montage ein Verbindungselement an der Stelleinheit bereits angeordnet oder ausgebildet sein kann, und die gabelförmige Öffnung einfach in Längsrichtung eingesetzt werden kann, so dass das Verbindungselement in das Langloch eingeschoben wird.

Eine in Längsrichtung fixe Fixierverbindung kann mit geringem Aufwand und zuverlässig dadurch erzeugt werden, dass das Energieabsorptionselement eine Befestigungsöffnung aufweist, in der ein genanntes Verbindungselement auch in Längsrichtung formschlüssig spielfrei aufgenommen ist.

Es kann vorgesehen sein, dass das Energieabsorptionselement einen Verformungsstreifen aufweist, der von dem Verformungsorgan umgriffen wird. Ein Verformungsstreifen, auch als Energieabsorptionsstreifen bezeichnet, kann einen streifenförmigen Steg oder Streifen aufweisen, beispielsweise einen schmalen Blechstreifen aus Stahl oder einem anderen metallischen Werkstoff, oder auch aus einem Kunststoff. Der Verformungsstreifen ist in Längsrichtung durch einen in Längsrichtung durchgehenden Durchgang in dem Verformungsorgan hindurchgeführt, welches als an der Trageinheit in Längsrichtung abgestützter Schlitten ausgebildet sein kann, wobei der Durchgang die Längsseiten des Verformungsstreifens umgreift, und bevorzugt in Querrichtung Untermaß hat. Durch die relative Bewegung wird im Crashfall der Verformungsstreifen durch den Durchgang hindurchgezogen und in Längsrichtung fortlaufend plastisch gequetscht, d.h. unter Energieabsorption deformiert. Der Durchgang kann U-förmig ausgebildet sein, so dass der Schlitten von außen auf den Verformungsstreifen aufgesetzt sein kann. Eine derartige Anordnung, die im Grunde in der genannten DE 10 2011 015 140 A1 oder der DE 10 2016 220 531 A1 beschrieben ist, kann durch die Erfindung in vorteilhafter Weise ohne zusätzlichen Fertigungsaufwand flexibler und mit erhöhter Funktionssicherheit ausgestaltet werden.

Es kann vorgesehen sein, dass die Trageinheit eine in Höhenrichtung) verstellbare Manteleinheit aufweist, in der die Stelleinheit aufgenommen ist. Eine derartige Höhenverstellung kann beispielsweise in an sich bakannter Weise dadurch realisiert sein, dass ein Mantelrohr der Stelleinheit in einem lenkradfernen, in Fahrtrichtung vorderen Bereich um eine horizontale, quer zur Längsrichtung angeordnete Schwenkachse an der Trageinheit nach oben und unten schwenkbar gelagert ist. Dadurch kann das hinten an der Lenkspindel angebrachte Lenkrad in der Höhe verstellt werden.

Es ist möglich, dass die Stelleinheit ein Mantelrohr oder Innenmantel aufweist, welches teleskopierend in einer Manteleinheit aus Außenmantel angeordnet ist. Eine Lenksäule mit einer längenverstellbaren Mantelanordnung aus einfach oder mehrfach teleskopartig verstellbar in einer Manteleinheit angeordneten Mantelrohren ist an sich bekannt, beispielsweise aus der genannten DE 10 2016 220 531 A1. Die Energieabsorptionseinrichtung ist zwischen zwei Mänteln eingekoppelt, wobei dank der Erfindung eine höhere Sicherheit im Crashfall erreicht werden kann, und durch einen größeren möglichen Verformungsgrad des Energieabsorptionselements eine verbesserte Energieabsorption und eine kompaktere Bauform realisierbar ist.

Eine Längen- und Höhenverstellung können bevorzugt miteinander kombiniert werden.

Es kann vorgesehen sein, dass die Trageinheit eine Spanneinrichtung aufweist, die in eine Fixierstellung oder eine Lösestellung bringbar ist, wobei die Stelleinheit in der Fixierstellung relativ zur Trageinheit festgelegt ist, und in der Lösestellung relativ zur Trageinheit verstellbar ist. Durch die Spanneinrichtung können teleskopierbare Mantelrohre lösbar verspannt werden, um in der Lösestellung eine Längsverstellung zu ermöglichen. Soweit eine Höhenverstellung vorgesehen ist, kann die Stelleinheit zusätzlich lösbar an der Trageinheit verspannt werden, um in der Lösestellung eine Höhenverstellung zu ermöglichen. Die Betätigung kann manuell erfolgen, beispielsweise über einen manuell bedienbaren Spannhebel, der mit einem an sich bekannten Spanneinrichtung wie einer Keilscheiben-, Nocken- oder Kippstiftvorrichtung zusammenwirkt, um die Lenkradeinstellung wahlweise im Fahrbetrieb zu fixieren oder in der Löseposition eine Verstellung zur Anpassung an die Fahrerposition zu ermöglichen.

Es kann ebenfalls vorgesehen sein, dass zwischen der Trageinheit und der Stelleinheit ein motorischer Verstellantrieb angeordnet ist. Ein Verstellantrieb kann zur Längsverstellung zwischen Mänteln eingegekoppelt sein. Der Verstellantrieb kann beispielsweise einen Spindeltrieb umfassen, mit einer auf einer Gewindespindel angeordneten Spindelmutter, und einem elektrischen Antriebsmotor, von dem die Gewindespindel und die Spindelmutter relativ zueinander drehend antreibbar sind. Derartige Verstellantriebe sind im Stand der Technik prinzipiell bekannt und gelten als zuverlässig und robust. Dabei ist die Spindelmutter an dem einen Mantel in Längsrichtung unverschieblich angebracht, und die Gewindespindel an dem dazu teleskopierbaren anderen Mantel. Von einem Antriebsmotor wird über ein geeignetes Getriebe, beispielsweise ein Schnecken- oder Riemengetriebe, die Spindelmutter oder die Gewindespindel drehend angetrieben, wodurch die relativ dazu bezüglich der Drehung feststehende Gewindespindel oder Spindelmutter translatorisch in Richtung der Spindelachse bewegt wird, und je nach relativer Drehrichtung die Mäntel in Längsrichtung zusammen- oder auseinandergefahren werden. Zu Höhenverstellung kann ein ähnlich ausgestalteter motorischer Verstellantrieb in Höhenrichtung zwischen der Stell- oder Manteleinheit und der Trageinheit eingegliedert sein. Bedarfsweise können Längs- und Höhenverstellantrieb kombiniert werden.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenksäule in einer schematischen perspektivischen Darstellung,
- Figur 2: die Lenksäule gemäß Figur 1 in einer weiteren perspektivischen Darstellung,
- Figur 3: eine Energieabsorptionseinrichtung einer Lenksäule gemäß Figur 1 in einer freigestellten Darstellung,
- Figur 4: eine Detailansicht des Energieabsorptionselements aus Figur 3,
- Figur 5: die Energieabsorptionseinrichtung gemäß Figur 3 in einer weiteren perspektivischen Ansicht,
- Figur 6: eine teilweise schematische Seitenansicht einer Lenksäule gemäß Figur 1 in einem normalen Betriebszustand vor einem Crashfall,
- Figur 7: eine teilweise schematische Seitenansicht einer Lenksäule analog zu Figur 6 nach einem Crashfall,
- Figur 8: eine zweite Ausführungsform einer erfindungsgemäße Lenksäule in einer schematischen perspektivischen Darstellung,
- Figur 9: eine Detailansicht wie in Figur 3 eines Energieabsorptionselements in einer zweiten Ausführungsform.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

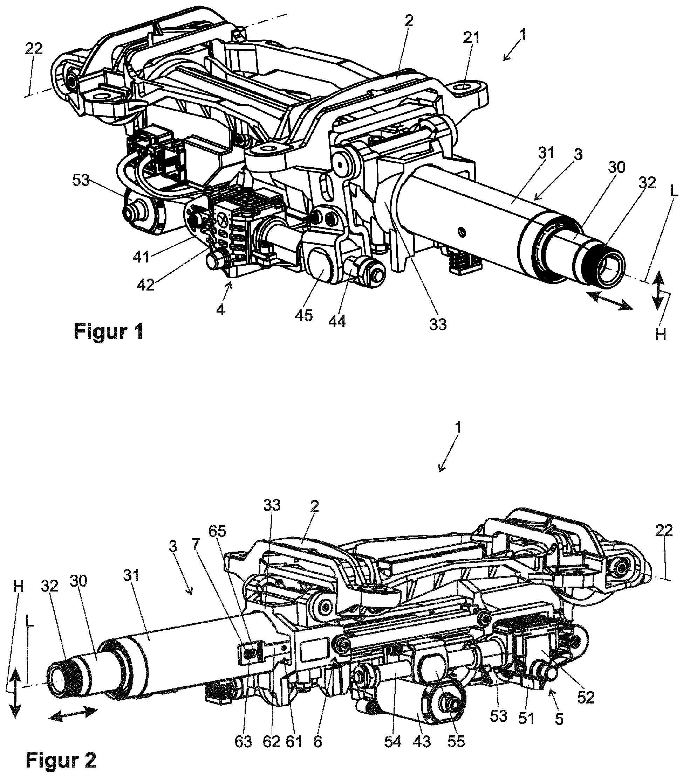

In den Figuren 1 und 2 ist eine erfindungsgemäße Lenksäule 1 schematisch in perspektivischer Ansicht schräg von hinten (bezogen auf die Fahrtrichtung eines nicht gezeigten Kraftfahrzeugs) dargestellt.

Die Lenksäule 1 kann an der Karosserie eines nicht dargestellten Kraftfahrzeugs mittels einer Trageinheit 2, auch als Konsole bezeichnet, befestigt werden. Die Trageinheit 2 umfasst zur Verbindung mit der Fahrzeugkarosserie Befestigungsmittel 21, die hier als Befestigungsöffnungen ausgebildet sind. Die Trageinheit 2 ist in der hier dargestellten Ausführungsvariante als Gussteil aus einer Leichtmetalllegierung hergestellt. Alternativ ist auch eine Trageinheit 2 denkbar und möglich, die als Blech-Biege-Bauteil ausgebildet ist.

Eine Stelleinheit 3 umfasst eine Lenkspindel 30, die in einem Innenmantelrohr 31, auch als inneres Mantelrohr oder Innenmantel 31 bezeichnet, um ihre in Längsrichtung erstreckte Längsachse L drehbar gelagert. Hinten an der Lenkspindel 30 ist ein Befestigungsabschnitt 32 zur Befestigung eines nicht dargestellten Lenkrads zur manuellen Eingabe von Lenkbefehlen ausgebildet. Das Innenmantelrohr 31 ist in einer Außenmantelrohr 33, auch kurz als Außenmantel, äußere Manteleinheit oder Manteleinheit bezeichnet, in Längsrichtung teleskopartig verschiebbar aufgenommen und gehalten.

Zur Realisierung einer Höhenverstellung ist die Manteleinheit 33 um eine horizontale Schwenkachse 22 verschwenkbar an der Trageinheit 2 gelagert, so dass die Lenkspindel 30 in einer Höhenrichtung H auf und ab bewegt werden kann, wie mit dem Doppelpfeil angedeutet ist.

Ein als Rotationsspindeltrieb ausgebildeter Verstellantrieb 4 dient zur Höhenverstellung und weist eine Antriebseinheit 41 mit einem Antriebsgehäuse 42 auf, an dem als Antriebsmotor ein elektrischer Motor 43 angeflanscht ist. In dem Antriebsgehäuse 42 ist ein mit dem Motor 43 gekuppeltes Getriebe untergebracht, welches hier nicht im Einzelnen dargestellt ist, und beispielsweise als Schneckengetriebe ausgebildet sein kann. Mit dem Ausgang des Getriebes ist eine Gewindespindel 44 um ihre Spindelachse drehend antreibbar. Diese Gewindespindel 44 erstreckt sich axial, also in Richtung der Spindelachse von dem Antriebsgehäuse 42, welches seinerseits axial an der an der Manteleinheit 33 abgestützt ist.

Die Gewindespindel 44 greift mit ihrem Außengewinde in eine bezüglich Drehung um die Spindelachse G feststehende Spindelmutter 45 ein. Die Spindelmutter 45 greift an einem Stellhebel 23 an, der zwischen der Manteleinheit 33 und der Trageinheit 2 in voneinander beabstandeten horizontalen Schwenklagern gelagert ist. Dadurch führt ein drehender Antrieb der Gewindespindel 44 zu einer axialen linearen Verlagerung der Spindelmutter 45 und dadurch zu einer Verstellung des Stellhebels 23, wodurch das Außenmantelrohr 33 samt Stelleinheit 3 relativ zur Trageinheit 2 in Höhenrichtung H verstellt werden kann.

Zur Längsverstellung ist ein zweiter, ebenfalls als Spindeltrieb im Prinzip gleichartig aufgebauter Verstellantrieb 5 vorgesehen. Dieser umfasst eine Antriebseinheit 51, ein Antriebsgehäuse 52, einen Motor 53, eine Gewindespindel 54 und eine Spindelmutter 55. Das Antriebsgehäuse 52 ist axial an dem Außenmantel 33 abgestützt, die Gewindespindel 54 liegt im Wesentlichen parallel zur Längsachse L, und die Spindelmutter 55 greift in Richtung der Längsachse L an dem Mantelrohr 31 an. Durch Aktivierung der Antriebseinheit 51 kann dadurch das Innenmantelrohr 31 relativ zu Außenmantel 33 in Längsrichtung teleskopartig ein- oder ausgefahren werden, wie mit einem Doppelpfeil angedeutet ist.

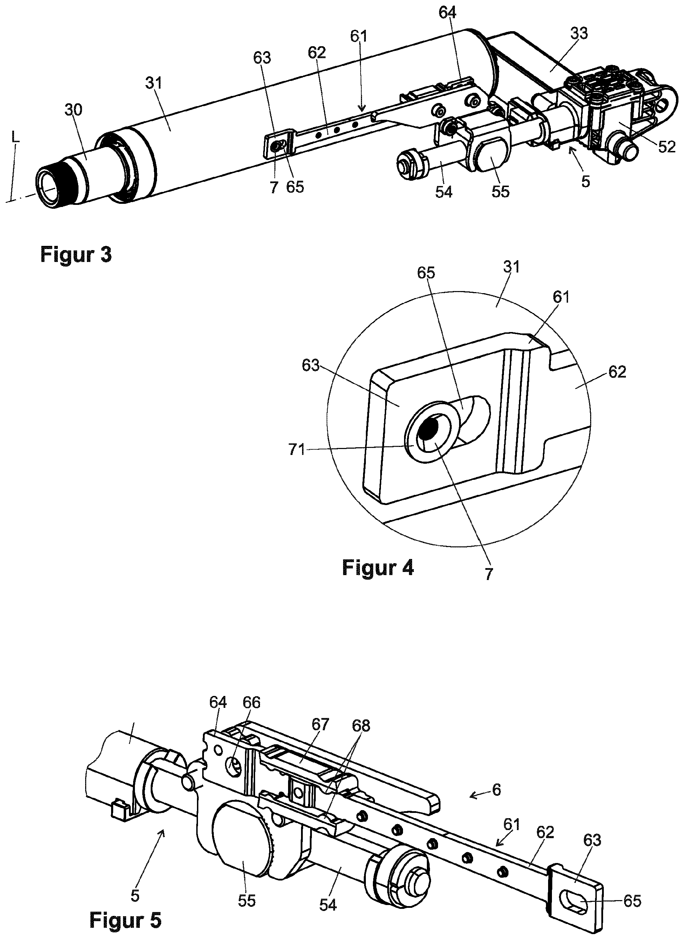

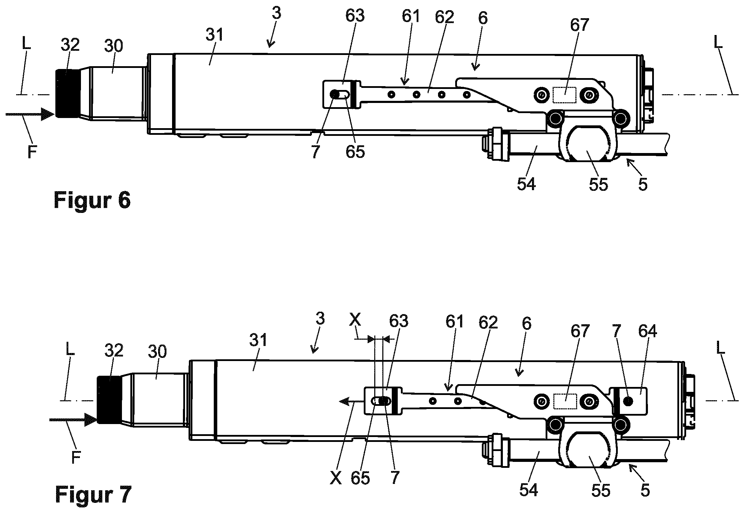

Eine Energieabsorptionseinrichtung 6 ist in Figur 3 schematisch freigestellt in der Perspektive von Figur 2 gezeigt, wobei der Außenmantel 33 zur besseren Übersicht weggelassen ist. In Figur 5 ist eine Ansicht von der gegenüberliegenden Seite gezeigt, wobei auch noch das Innenmantelrohr 31 weggelassen ist. Figuren 6 und 7 zeigen Seitenansichten der Anordnung von Figur 3 vor einem Crashfall (Figur 6) und nach einem Crashfall (Figur 7).

Die Energieabsorptionseinrichtung 6 umfasst ein Energieabsorptionselement, welches als Verformungsstreifen 61 ausgebildet ist. Dieser weist einen in Längsrichtung langgestreckten, streifenförmigen Verformungsabschnitt 62 auf, der in seinem hinteren Endbereich einen erfindungsgemäß ausgestalteten Befestigungsabschnitt 63 aufweist, und in seinem anderen, vorderen Endbereich einen konventionellen Befestigungsabschnitt 64. Zwischen den Befestigungsabschnitten 63, 64 weist der Verformungsabschnitt 62 den Energieabsorptionsabschnitt auf.

Die Befestigungsabschnitte 63, 64 sind gekröpft ausgebildet, so dass sie außen an dem Innenmantelrohr 31 anliegen, während der Verformungsabschnitt 52 Abstand zur Außenfläche des Innenmantelrohrs 31 hat.

Der in Figur 4 vergrößert im Detail dargestellte Befestigungsabschnitt 63 weist erfindungsgemäß ein in Längsrichtung langgestrecktes Langloch 65 auf. Durch das Langloch 65 erstreckt sich ein Verbindungselement 7, welches als Niet oder Bolzen ausgebildet sein kann, und welches in Längsrichtung in dem Langloch 65 bewegbar ist. Bevorzugt weist das Verbindungselement 7 einen Kopf 71 auf, der quer über das Langloch 65 übersteht und somit den Befestigungsabschnitt 63 formschlüssig von außen an dem Innenmantelrohr 31 hält.

Durch den in dem Langloch 65 längsverschiebliche Verbindungselement 7 wird eine versatzausgleichende Befestigung im Sinne der Erfindung gebildet, die es ermöglicht, dass der Befestigungsabschnitt 63 relativ zum Innenmantelrohr 31 in Längsrichtung geführt bewegbar ist.

Bevorzugt sind das Langloch 65 und das Verbindungselement 7 derart ausgebildet, dass diese im Crashfall möglichst kraftarm relativ zueinander bewegbar sind, um somit die erfindungsgemäße versatzausgleichende Verschiebung zuzulassen.

Bevorzugt weist das Langloch 65 zumindest in einem Abschnitt eine Spielpassung zu dem Verbindungselement 7 auf. Versuche haben gezeigt, dass Spielpassungen mit einem Spiel von mehr als 10µm quasi keine störenden Widerstandskräfte beim Versatzausgleich aufweisen, insbesondere können so Stick-Slip-Effekte weitestgehend vermieden werden.

In dem anderen Befestigungsabschnitt 64 ist eine Befestigungsöffnung 66 ausgebildet ist, dessen Durchgangsquerschnitt mit dem dadurch eingesetzten Verbindungselement 7 im Wesentlichen spielfrei korrespondiert, beispielsweise wie dieses kreisrund ist, so dass zwischen dem Verformungsstreifen 61 und dem Innenmantelrohr 31 der Stelleinheit 3 eine auch in Längsrichtung formschlüssig festgelegte Fixierverbindung erzeugt wird.

An der Spindelmutter 55 ist ein als Verformungsschlitten 67 ausgebildetes Verformungsorgan angebracht, welches über die Gewindespindel 54 und das Antriebsgehäuse 52 an dem Außenmantel 33 befestigt und in Längsrichtung abgestützt.

Der Verformungsschlitten 67 hat eine U-förmige Grundform mit zwei Verformungsschenkeln 68 auf, die einander einen längs durchgehenden Durchgang begrenzen. Der Verformungsschlitten 67 umgreift den Verformungsstreifen 61 von außen derart, dass der Verformungsabschnitt 62 durch den Durchgang hindurchgeführt ist. Dabei ist der Abstand der Verformungsschenkel 68, der die Breite des Durchgangs angibt, kleiner als die Breite des Verformungsabschnitts 62 quer zur Längsrichtung gemessen.

Im Crashfall wirkt durch einen auf das Lenkrad aufprallenden Körper eine große Kraft F in Längsrichtung nach vorn auf die Stelleinheit 3, wie in Figur 6 schematisch in der Seitenansicht der Stelleinheit 3 vor dem Crashfall angegeben ist. Durch diese Crashkraft F wird das Innenmantelrohr 31 samt dem Verformungsstreifen 61 nach vorn relativ zum Außenmantel 33 und dem daran angebrachten Verstellantrieb 5 verschoben. Dabei wird der Verformungsabschnitt 62 nach vorn durch den Durchgang des Verformungsschlittens 67, der in Figur 6 und 7 durch die an dem Verstellantrieb 5 abgestützte Spindelmutter 55 verdeckt ist und gestrichelt eingezeichnet ist, in Längsrichtung hindurchgeschoben. Durch die Verformungsschenkel 68 wird der Verformungsabschnitt 62 dabei im Crash über seine Länge fortlaufend quer plastisch zusammengequetscht, wodurch kinetische Energie in Verformungsarbeit umgesetzt und dadurch absorbiert wird.

Durch das fortlaufende Zusammenquetschen in Querrichtung wird der Verformungsabschnitt 62 nicht nur in Querrichtung plastisch verformt, sondern auch in Längsrichtung um einen Betrag X gelängt, d.h. plastisch in Längsrichtung gestreckt bzw. verlängert, wie in dem Zustand nach dem Crash in Figur 7 eingezeichnet. Die Fixierverbindung des vorderen Befestigungsabschnitts 64 ist in Längsrichtung fix. Durch die Längung bedingt bewegt sich der hintere Befestigungsabschnitt 63 um einen Versatz mit dem Betrag X nach hinten. Dabei kann das Verbindungselement 7 versatzausgleichend in dem Langloch 65 entlanggleiten, so dass sich der Befestigungsabschnitt 63 in Längsrichtung relativ zur Stelleinheit 3 nach hinten bewegen kann. Dadurch wird der durch die Längung des Verformungsstreifens 61 erzeugte Versatz ausgeglichen, und es treten keine Biegespannungen auf, die zu einer schädlichen Durchbiegung des Verformungsabschnitts 62 im Crashfall führen könnten.

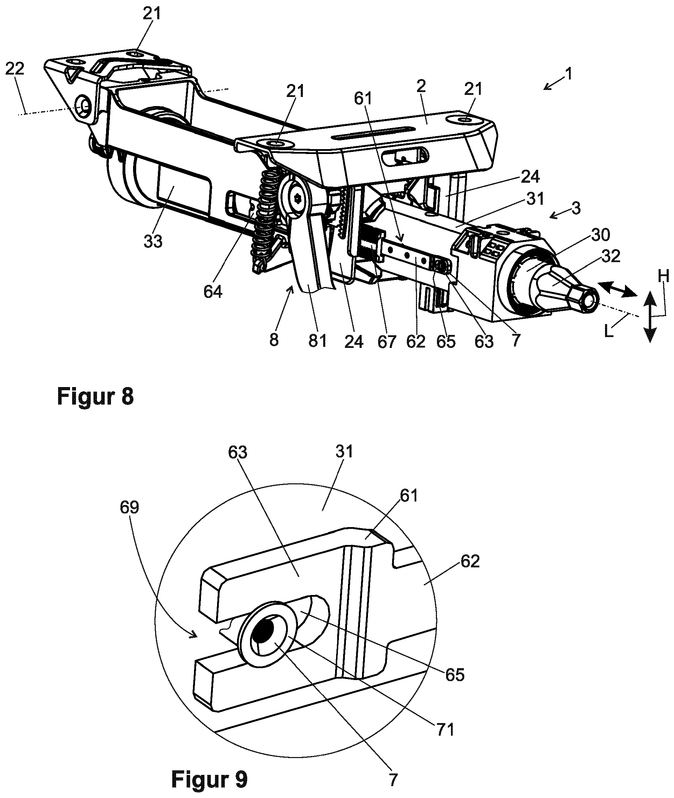

In Figur 9 ist in derselben Ansicht wie in Figur 4 eine Abwandlung der Erfindung gezeigt, wobei das Langloch 65 zum Ende des Befestigungsabschnitts 63 hin offen ausgebildet ist, d.h. eine Öffnung 69 aufweist. Dadurch wird eine leicht montierbare, gabelförmige Anordnung gebildet.

Figur 8 zeigt in einer Ansicht ähnlich Figur 1 eine manuell verstellbare Lenksäule 1, die keine Verstellantriebe 5, 6 aufweist, wobei ansonsten jedoch dieselben Bezugszeichen verwendet werden.

Der Außenmantel 33 ist zwischen zwei gabelförmig nach unten vorstehenden Seitenwangen 24 höhenverstellbar angeordnet. Mittels einer Spanneinrichtung 8, die durch manuelle Betätigung eines Spannhebels 81 wahlweise in eine Fixier- oder Lösestellung gebracht werden kann, können besagte Seitenwangen 24 in Fixierstellung kraftschlüssig gegen den Außenmantel 33 verspannt werden, so dass dieser zwischen den Seitenwangen 24 in Höhenrichtung fixiert ist und gleichzeitig der Innenmantel 31 in dem Außenmantel 33 geklemmt und relativ dazu in Längsrichtung fixiert ist. In Lösestellung ist die Verspannung aufgehoben, so dass eine manuelle Verstellung in Längs- und Höhenrichtung erfolgen kann.

Die Energieabsorptionseinrichtung 6 ist wie bei der motorisch verstellbaren ersten Ausführung wirkungsmäßig in Längsrichtung zwischen Innenmantel 31 und Außenmantel 33 eingegliedert. Die im Crashfall auftretende Längung X kann wie beschrieben durch die versatzausgleichende Ausgestaltung der Befestigung des hinteren Befestigungsabschnitts 63 des Verformungsstreifens 61 ausgeglichen werden, so dass die erfindungsgemäßen Vorteile realisiert werden.

### Bezugszeichenliste

- 1: Lenksäule
- 2: Trageinheit
- 21: Befestigungsmittel
- 22: Schwenkachse
- 23: Stellhebel
- 24: Seitenwange
- 3: Stelleinheit
- 31: Innenmantelrohr
- 32: Befestigungsabschnitt
- 33: Außenmantelrohr (Außenmantel)
- 4, 5: Verstellantrieb
- 41,51: Antriebseinheit
- 42,52: Antriebsgehäuse
- 43,53: Motor
- 44,54: Gewindespindel
- 45,55: Spindelmutter
- 6: Energieabsorptionseinrichtung
- 61: Verformungsstreifen
- 62: Verformungsabschnitt
- 63,64: Befestigungsabschnitt
- 65: Langloch
- 66: Befestigungsöffnung
- 67: Verformungsschlitten
- 68: Verformungsschenkel
- 69: Öffnung
- 7: Verbindungselement
- 71: Kopf
- 8: Spanneinrichtung
- 81: Spannhebel

- L: Längsachse
- H: Höhenrichtung
- F: Crashkraft
- X: Betrag der Längung (Versatz)

## Patentansprüche

1. Lenksäule (1) für ein Kraftfahrzeug, umfassend eine Stelleinheit (3), in der eine Lenkspindel (30) um eine in Längsrichtung erstreckte Längsachse (L) drehbar gelagert ist, eine mit einer Kraftfahrzeugkarosserie verbindbare Trageinheit (2), in der die Stelleinheit (3) in Längsrichtung verlagerbar gehalten ist, und eine zwischen der Trageinheit (2) und der Stelleinheit (3) eingegliederte Energieabsorptionseinrichtung (6), mit einem langgestreckten, über eine Befestigung (63, 64, 7) an der Stelleinheit (3) oder der Trageinheit (2) befestigten Energieabsorptionselement (61) und einem damit zusammenwirkenden, an der Trageinheit (2) oder der Stelleinheit (3) angebrachten Verformungsorgan (67), welches im Crashfall bei einer relativen Verschiebung von Stelleinheit (3) und Trageinheit (2) eine energieabsorbierende plastische Verformung des Energieabsorptionselements (61) bewirkt,
wobei das Energieabsorptionselement (61) an der Stelleinheit (3) befestigt und das damit zusammenwirkende Verformungsorgan (67) an der Trageinheit (2) angebracht ist, oder das Energieabsorptionselement (61) an der Trageinheit (2) befestigt und das damit zusammenwirkende Verformungsorgan (67) an der Stelleinheit angebracht ist, wobei die Befestigung eine in Längsrichtung festgelegte Fixierverbindung (64) aufweist,
**dadurch gekennzeichnet,**
**dass** die Befestigung mindestens eine in Längsrichtung versatzausgleichend ausgebildete Befestigungseinrichtung (63,7) aufweist, die in Längsrichtung verschiebbar ausgestaltet ist.

2. Lenksäule nach Anspruch 1, **dadurch gekennzeichnet, dass** jeweils eine Befestigung (63, 64) in einem Endbereich des Energieabsorptionselements (61) angeordnet ist.

3. Lenksäule nach einem der vorangehenden Ansprüche, **dadurch gekennzeichnet, dass** die versatzausgleichende Befestigungseinrichtung (63) ein in Längsrichtung erstrecktes Langloch (65) aufweist, durch das sich ein Verbindungselement (7) erstreckt.

4. Lenksäule nach Anspruch 3, **dadurch gekennzeichnet, dass** das Langloch (65) in dem Energieabsorptionselement (61) ausgebildet ist, und das Verbindungselement (7) an der Stelleinheit (3) fixiert ist.

5. Lenksäule nach Anspruch 3 oder 4, **dadurch gekennzeichnet, dass** das Langloch (65) in Längsrichtung geschlossen ist.

6. Lenksäule nach Anspruch 3 oder 4, **dadurch gekennzeichnet, dass** das Langloch (65) an einem Ende offen ist.

7. Lenksäule nach einem der vorangehenden Ansprüche, **dadurch gekennzeichnet, dass** das Energieabsorptionselement (61) einen Verformungsstreifen (62) aufweist, der von dem Verformungsorgan (67) umgriffen wird.

8. Lenksäule nach einem der vorangehenden Ansprüche, **dadurch gekennzeichnet, dass** die Trageinheit (2) eine in Höhenrichtung (H) verstellbare Manteleinheit (33) aufweist, in der die Stelleinheit (3) aufgenommen ist.

9. Lenksäule nach einem der vorangehenden Ansprüche, **dadurch gekennzeichnet, dass** die Stelleinheit (3) ein Mantelrohr (31) aufweist, welches teleskopierend in einer Manteleinheit (33) angeordnet ist.

10. Lenksäule nach einem der vorangehenden Ansprüche, **dadurch gekennzeichnet, dass** die Trageinheit (2) eine Spanneinrichtung (8) aufweist, die in eine Fixierstellung oder eine Lösestellung bringbar ist, wobei die Stelleinheit (3) in der Fixierstellung relativ zur Trageinheit (2) festgelegt ist, und in der Lösestellung relativ zur Trageinheit (2) verstellbar ist.

11. Lenksäule nach einem der vorangehenden Ansprüche, **dadurch gekennzeichnet, dass** zwischen der Trageinheit (2) und der Stelleinheit (3) ein motorischer Verstellantrieb (4) angeordnet ist.

## Claims

1. A steering column (1) for a motor vehicle, comprising an actuating unit (3), in which a steering spindle (30) is mounted rotatably about a longitudinal axis (L) extending in the longitudinal direction,
a supporting unit (2), which is connectable to a motor vehicle body and in which the actuating unit (3) is held so as to be displaceable in the longitudinal direction, and an energy absorption device (6), which is incorporated between the supporting unit (2) and the actuating unit (3) and has an elongate energy absorption element (61),
fastened to the actuating unit (3) or to the supporting unit (2) via a fastening (63, 64, 7), and has a deformation member (67), which interacts with said energy absorption element, is attached to the supporting unit (2) or to the actuating unit (3) and, in the event of a crash with a relative displacement of actuating unit (3) and supporting unit (2), brings about an energy-absorbing plastic deformation of the energy absorption element (61),
wherein the energy absorption element (61) is fastened to the actuating unit (3), and the deformation member (67) interacting therewith is attached to the supporting unit (2), or the energy absorption element (61) is fastened to the supporting unit (2), and the deformation member (67) interacting therewith is attached to the actuating unit (3), wherein the fastening has a fixing connection (64) secured in the longitudinal direction,
**characterized in that**
the fastening has at least one fastening device (63, 7) designed to be offset-compensating in the longitudinal direction, which is displaceable in the longitudinal direction.

2. The steering column as claimed in claim 1, **characterized in that** a fastening (63, 64) is arranged in each end region of the energy absorption element (61).

3. The steering column as claimed in one of the preceding claims, **characterized in that** the offset-compensating fastening device (63) has an elongated hole (65) which extends in the longitudinal direction and through which a connecting element (7) extends.

4. The steering column as claimed in claim 3, **characterized in that** the elongated hole (65) is formed in the energy absorption element (61), and the connecting element (7) is fixed to the actuating unit (3).

5. The steering column as claimed in claim 3 or 4, **characterized in that** the elongated hole (65) is closed in the longitudinal direction.

6. The steering column as claimed in claim 3 or 4, **characterized in that** the elongated hole (65) is open at one end.

7. The steering column as claimed in one of the preceding claims, **characterized in that** the energy absorption element (61) has a deformation strip (62) around which the deformation member (67) engages.

8. The steering column as claimed in one of the preceding claims, **characterized in that** the supporting unit (2) has a casing unit (33) which is adjustable in the vertical direction (H) and in which the actuating unit (3) is accommodated.

9. The steering column as claimed in one of the preceding claims, **characterized in that** the actuating unit (3) has a casing tube (31) which is arranged telescopically in a casing unit (33).

10. The steering column as claimed in one of the preceding claims, **characterized in that** the supporting unit (2) has a clamping device (8) which can be brought into a fixing position or a release position, wherein the actuating unit (3) is secured relative to the supporting unit (2) in the fixing position, and is adjustable relative to the supporting unit (2) in the release position.

11. The steering column as claimed in one of the preceding claims, **characterized in that** a motorized adjusting drive (4) is arranged between the supporting unit (2) and the actuating unit (3).

## Revendications

1. Colonne de direction (1) pour un véhicule automobile, comprenant une unité de réglage (3) dans laquelle un arbre de direction (30) est monté à rotation autour d'un axe longitudinal (L) s'étendant dans la direction longitudinale,
une unité de support (2) pouvant être reliée à une carrosserie de véhicule automobile, dans laquelle l'unité de réglage (3) est maintenue de manière à pouvoir être déplacée dans la direction longitudinale, et un dispositif d'absorption d'énergie (6) inséré entre l'unité de support (2) et l'unité de réglage (3), avec un élément allongé, fixé par une fixation (63, 64, 7) à l'unité de réglage (3) ou à l'unité de support (2) et un organe de déformation (67) coopérant avec celui-ci, monté sur l'unité de support (2) ou sur l'unité de réglage (3), qui provoque en cas de collision, lors d'un déplacement relatif de l'unité de réglage (3) et de l'unité de support (2), une déformation plastique absorbant l'énergie de l'élément d'absorption d'énergie (61),
l'élément d'absorption d'énergie (61) étant fixé à l'unité de réglage (3) et l'organe de déformation (67) coopérant avec lui étant monté sur l'unité de support (2), ou
l'élément d'absorption d'énergie (61) étant fixé à l'unité de support (2) et l'organe de déformation (67) coopérant avec lui étant monté sur l'unité de réglage,
la fixation présentant une liaison de fixation (64) fixée dans la direction longitudinale,
**caractérisé en ce que**
**en ce que** la fixation présente au moins un dispositif de fixation (63, 7) réalisé de manière à compenser le décalage dans la direction longitudinale, qui est réalisé de manière à pouvoir être déplacé dans la direction longitudinale.

2. Colonne de direction selon la revendication 1, **caractérisée en ce qu'**une fixation (63, 64) respective est disposée dans une zone d'extrémité de l'élément d'absorption d'énergie (61).

3. Colonne de direction selon l'une des revendications précédentes, **caractérisée en ce que** le dispositif de fixation (63) compensant le déport présente un trou oblong (65) s'étendant dans la direction longitudinale, à travers lequel s'étend un élément de liaison (7).

4. Colonne de direction selon la revendication 3, **caractérisée en ce que** le trou oblong (65) est formé dans l'élément d'absorption d'énergie (61), et l'élément de liaison (7) est fixé à l'unité de réglage (3).

5. Colonne de direction selon la revendication 3 ou 4, **caractérisée en ce que** le trou oblong (65) est fermé dans la direction longitudinale.

6. Colonne de direction selon la revendication 3 ou 4, **caractérisée en ce que** le trou oblong (65) est ouvert à une extrémité.

7. Colonne de direction selon l'une quelconque des revendications précédentes, **caractérisée en ce que** l'élément d'absorption d'énergie (61) comporte une bande de déformation (62) enserrée par l'organe de déformation (67).

8. Colonne de direction selon l'une quelconque des revendications précédentes, **caractérisée en ce que** l'unité de support (2) comporte une unité d'enveloppe (33) réglable dans la direction de la hauteur (H), dans laquelle est logée l'unité de réglage (3).

9. Colonne de direction selon l'une quelconque des revendications précédentes, **caractérisée en ce que** l'unité de réglage (3) comprend un tube d'enveloppe (31) qui est disposé de manière télescopique dans une unité d'enveloppe (33).

10. Colonne de direction selon l'une des revendications précédentes, **caractérisée en ce que** l'unité de support (2) présente un dispositif de serrage (8) qui peut être amené dans une position de fixation ou dans une position de libération, l'unité de réglage (3) étant fixée par rapport à l'unité de support (2) dans la position de fixation et étant réglable par rapport à l'unité de support (2) dans la position de libération.

11. Colonne de direction selon l'une des revendications précédentes, **caractérisée en ce qu'**un entraînement de réglage motorisé (4) est disposé entre l'unité de support (2) et l'unité de réglage (3).
